# EUROPEAN PATENT APPLICATION

(11) **EP 3 840 322 A1**
(43) Date of publication of application: **23.06.2021**
(21) Application number: 19306713.9
(22) Date of filing: 20.12.2019
(51) Int. Cl.: H04L 29/06, H04W 12/00, H04W 12/06

(54) **METHOD TO FACILITATE USER AUTHENTICATING IN A WIRELESS NETWORK**

(71) Applicant: THALES DIS FRANCE SA, 92190 Meudon (FR)
(72) Inventor: SIBA, Jan, 13881 GEMENOS CEDEX (FR); ROZAK-DRAICCHIO, Lionel, 13881 GEMENOS CEDEX (FR); DANY, Vicent, 13881 GEMENOS CEDEX (FR)
(74) Representative: Grevin, Emmanuel

(57) **Abstract**

The present invention relates to a method for authentication of a user of a user equipment by an authentication server being coupled to a wireless network, said authentication server maintaining a set of authentication criteria for accessing at least one subset of said wireless network, hereinafter the network subset, in response to receiving an authentication request of a user equipment communicatively coupled to a secure chip card, the method comprises the steps of:
- sending a request for authentication to the secure chip card,
said request for authentication indicating at least one mode of user verification,
- receiving at least one result of user authentication from the secure chip card,
- evaluating said received at least one result of user authentication,
- giving access to the network subset, if the evaluation step fulfills said authentication criteria.

## Description

### FIELD OF THE INVENTION

The present invention relates to a method for authentication of a user in a network. The invention also pertains to a authentication server using said method.

The invention further relates to a method for a secure chip card. The invention also pertains to a secure chip card using said method.

### BACKGROUND OF THE INVENTION

With the advent of the new communication technology standard of 5G (or New Radio, NR) it appeared the possibility that companies could run their own 5G network on their campus, e.g. on a plant area for industrial applications, or to cover the whole network.

Apparently for such companies it appeared the need to control the authentication of registered end devices. In particular there is the need to control who is accessing the network.

By now, the authentication for accessing a cellular network is handled by the cellular network alone. It issues secured chip cards, like UICCs, eSIMs, secure elements (SE) and the like which store in a secured memory access credentials. In course of attaching the user equipment, which is coupled with said secured chip card, to the cellular network, these access credentials are checked.

This has in the new context of company network however the drawback that it still only authenticates the user equipment, without taking into account who is using them. This is for an organization with certain security requirements simply not sufficient.

Second, the organization might have the need to influence the authentication of user accessing the company slice, which is with the current approach not possible.

It is therefore the goal of present invention to overcome the mentioned disadvantages and to propose a solution for an improved authentication of users for a wireless network, in particular when governed by a separate authentication server of a company network.

Further alternative and advantageous solutions would, accordingly, be desirable in the art.

### SUMMARY OF THE INVENTION

For this it is according to a first aspect of the invention suggested a method to for authentication of a user of a user equipment according to claim 1. It is further suggested according to a second aspect of the invention a authentication server according to claim 7.
In a third aspect of the invention it is proposed a method for a secure chip card according to claim 10. It is further suggested according to a fourth aspect of the invention a secure chip card according to claim 14.

According to the first aspect of the invention it is proposed a method for authentication of a user of a user equipment by an authentication server being coupled to a wireless network, said authentication server maintaining a set of authentication criteria for accessing at least one subset of said wireless network, hereinafter the network subset
in response to receiving an authentication request of a user equipment communicatively coupled to a secure chip card, the method comprises the steps of:
- sending a request for authentication to the secure chip card,
said request for authentication indicating at least one mode of user verification,
- receiving at least one result of user authentication from the secure chip card,
- evaluating said received at least one result of user authentication,
- giving access to the network subset, if the evaluation step fulfills said authentication criteria.
The method according to the first aspect of the invention relates to an authentication server. This authentication server is coupled to a wireless network. This wireless network is in particular a common cellular network supporting a combination of technology standards like 3G, 4G, and 5G any beyond.
The authentication server is assigned to govern access to at least one specific subset of the wireless network, which is called the *network subset.*
Such network subset is one or a complex of network components, virtual or physical which represent at least one accessible entity of the wireless network. The authentication server serves to control access to that at least one network subset.
In one embodiment such network subset comprises one or more network slices, and the authentication server is assigned to at least one of said network slices.
A wireless network following the technology standard of 5G or beyond may comprise at least one network slice. Such network slices are virtually separated networks in the wireless network, wherein the network slice is preferably dedicated for a certain network service, device type, or a company network. The concept of network slices was introduced with the definition of 5G / New Radio (NR), along with mechanisms to select an appropriate network slice (discovery).
As an example it is foreseen to define a network slice for remote provisioning of not yet provisioned user equipment (means without regular authentication data stored in a secure chip card). This illustrates how hermetically separated network slices are designed, as an unknown user equipment might get access to a specific network slice, without the risk of compromising the wireless network as a whole. Other network slices are dedicated for a special type of service.
In another embodiment such network subset comprises an enterprise private network.
In this embodiment the network subset represents fully or parts of an enterprise private network. This is a new development in the technology standard of 5G, according to that campus networks can be set up, which allow access of user equipments using regular gNBs, to the company network, but being secured from the outside world. This is useful for large plant areas or a harbor area, where the owner can on the one hand secure availability of wireless network coverage, and additionally control access for giving access to company servers etc.
The network subset may comprise the full enterprise private network or parts thereof, like specially secured areas.
Advantageously the enterprise private network might comprise one or more network slices. In that case the authentication server governs access to at least one of both, or both. The latter case is even more advantageous as it manages access to the enterprise private network and the network slice with one mechanism.
Typically the authentication server is part of the wireless network, alternatively part of the network subset, in particular the enterprise private network or parts thereof.
Regardless of the type of network subset, the network subset is supposed to be extra secured, in particular as a requirement of the entity that is using the network subset. E.g. for a company network, access to the network slice shall not only be governed by the wireless network by way of the known AKA mechanism.
This mechanism only checks which user equipment plus UICC wants to access the wireless network. However there is additionally the requirement to check what person actually may get access to the network subset, which is not possible with the existing authentication methods of cellular technology. Additionally there is the need for the authentication server to determine how the user authenticates to gain access to the network subset, or parts thereof. This is where the invention comes into play.
It proposes that the authentication server, which might be triggered through previous transactions of a specific user equipment, sends a request for authentication to the secure chip card coupled to the user equipment. This is happening in response to an authentication request received from the user equipment.

Example of a secure chip card are universal integrated circuit cards (UICC), which usually has a tamper-resistant security system, like a secure file system etc., or other smart cards.
Said authentication request from the user equipment comprises in particular an identification of the user which wants to access the network subset. The user identification is in particular concealed, in order to prevent harm from potential sniffing activities.
Additionally said authentication request comprises a set of information for the requesting user equipment. This set if information in particular comprises indications relating to the means for gathering input from the user, including sensors etc.
After evaluating the received information at the authentication server, in particular if the user is available in its database, the request for authentication is sent back to the user equipment. Said request for authentication is designated to gather user authentication information in order to figure out, if the user is eligible for accessing the network subset.
Said request for authentication indicates at least one mode of user verification. With the mode of user verification it is meant ways to gather information from the user which are usable for determining if the user is eligible for accessing the network subset. In particular this means which information sources are to be used, like entering a PIN, biometric data collection, like sound recording, collecting a fingerprint, camera picture for face recognitions, etc., or anything else reliable for identifying a person, which acts as a user.
The authentication request may also indicate a combination of modes of user verification, like: PIN entry plus finger print.
With this mode of user verification the authentication server instructs the user equipment resp. its secure chip card, what information to collect from the user in order to allow access to parts of the complete network subset.
In response to sending the request for authentication the authentication server will receive at least one result of user authentication from the secure chip card, resp. the user equipment the secure chip card is coupled to.

Said result of user authentication is in particular encrypted or ciphered for not allowing someone who might be able to monitor the traffic on the air interface, to figure out the results of user authentication.
Moreover the result of user authentication might comprise a pre-evaluation result carried out at the secure chip card. I.e. if the correct PIN is entered is easily detectable by the secure chip card, and it is assured that it is not transferred to the authentication server.
On the other hand collected biometric data may be transferred completely, or at least in a compressed way.
In any case, in the authentication server the step of evaluating the received results of user authentication is carried out.
Here the authentication server has the chance to decide, if the user of the requested user equipment gets access with its user equipment to the network subset. This is in particular done by means of a authentication database, where the necessary data are stored for carrying out all modes of user verification based on the retrieved results of user authentication in the user equipment and secure chip card.
This approach is advantageous as it is easy to cope with legacy user equipments. Those which are just capable of collecting e.g. a voice recording for voice recognition and entering a PIN, can collect the authentication data and provide them, if necessary to the authentication server, where with the evaluation step the final decision for giving access is made.
In a preferred embodiment it is proposed that the step of evaluation comprises identifying a set of access rights for at least one of the wireless network and the network subset, and the step of giving access comprises a limited access right for said at least one of the wireless network and the network subset.
This embodiment relates to the result of the evaluation step, resp. giving access to the network subset, or not, or to which extent.
It proposed that the authentication server maintains access rights for the user, which might be limited based on what kind of allowance the user has. For the example of an enterprise private network or a company or any other entity (university, authority etc.) this would relate to different access rights for central servers. With this the access to specially protected data stored in a company network, which is accessible through the network subset, can be controlled in a fine-grained manner.
This means, when the user of the user equipment is well identified through the different modes of user verification, the access to the network subset is not necessarily unlimited.
The access rights do not only govern which servers or other entities can be accessed, it is in particular also defined, what actions the user is allowed to do on such servers. This means in particular access primitives like: read, write, modify, delete, create, execute. But more of such activities may be comprised. In another preferred embodiment it is proposed the set of access rights is limited in response to the received results of user authentication.
This embodiment also relates to the access rights of the user in response to the user authentication. In this case the access rights are not (or not only) derived from the access rights stored with the authentication server, but from the authentication results.
Background is, that unlike a PIN or password entry, which has a binary result (true or false), other modes of user verification have not clear true/false result. This applies in particular to biometric authentication.
Irrespective of where the evaluation is supposed to happen, the matching of a recorded sound file of the voice or a fingerprint or an image of the face with the reference data stored in the database of the authentication server leads to a result that can take more than 2 states.
Typically a biometric authentication matching delivers a result in percentage. The higher the percentage, the higher the trust of the authentication algorithm that the right person is trying to access the network subset.
According to this embodiment the access rights are related to the achieved percentage. That means, for a comparably low percentage only a common read-only access for some servers of the network subset is allowed, like the general intranet pages, but no network server holding somehow protected information.

For a percentage below a predetermined threshold of course no access is granted at all.
With an increase of user verification modes, which each deliver a certain percentage, the level of trust may be higher, which gives as a result of access rights that allow access to more servers or allow more activities of the user in the network subset.
Also for the network slice use case different types of service may be allowed in dependence of the access rights.
Additionally the embodiment comprises that the available ways regarding modes of user verification in the user equipment is taken into account for deciding about the access rights. E.g. if there is a user equipment that only allows PIN entry and voice recognition, while the authentication server requests also voice or face recognition, than the access rights are limited upfront.
The advantage is that such user equipments or a bad recognition value does not necessary lead to 'no access' at all, but gives some limited access.
Further this approach is advantageous for legacy user equipments which are not completely blocked from accessing the network subset, but cannot give complete access as the user as such would be granted.
According to another embodiment of the invention it is suggested that said request for user authentication comprises an associated user verification policy, said user verification policy indicating the requested modes of user verification.
This embodiment provides an improved and efficient way of requesting user authentication results from a user.
With the verification policy it is in particular defined what kind of user verification modes are requested.
Further the verification policy may define what level of trust, in particular by a percentage value, for a mode of verification is needed in order to achieve the full set of access rights.

The verification policy may also provide indication in regards to access rights that might be reachable when certain modes of user verification are available at the user equipment or are not available.

According to the second aspect of the invention it is proposed a authentication server for authentication a user of a user equipment, the authentication server being coupled to a wireless network, said authentication server further maintaining a set of authentication criteria for accessing at least one subset of said wireless network, hereinafter the network subset,
the authentication server is configured, in response to receiving an authentication request of a user equipment communicatively coupled to a secure chip card,
- to send a request for authentication to the secure chip card,
said request for authentication indicating at least one mode of user verification,
- to receive at least one result of user authentication from the secure chip card,
- to evaluate said received at least one result of user authentication,
- to give access to the network subset, if the evaluation step fulfills said authentication criteria.
This aspect of the invention relates to the authentication server. It is coupled to a wireless network which comprises at least one subset, the so-called network subset.
The authentication server has the task to govern access to said at least one network subset.
For that it is communicatively coupled to the wireless network. The wireless network is operating according to at least one of the technology standards of 3G, 4G, 5G or beyond.
The wireless network in particular comprises a plurality of base stations, like gNBs etc., for conducting the air interface to user equipments that are operating in the wireless network. For that the user equipments are communicatively coupled to secure chip cards, like SIM card, UICC, eUICC etc.

The authentication server further has access to at least one database for storing user profiles of users, in particular those who have access to at least parts of the network subset where the authentication server is assigned to. This aspect of the invention shares the advantages of the first aspect of the invention.

In a third aspect of the invention it is proposed a method for a secure chip card communicatively coupled to a user equipment operating in a wireless network, the secure chip card comprising a authentication application, the wireless network comprising at least one subset of said wireless network, hereinafter the network subset, and an authentication server maintaining a set of authentication criteria for accessing said network subset,
wherein for authenticating the user of the user equipment in the network subset the method comprises the steps for the secure chip card of:
- sending an authentication request to the authentication server,
- receiving a request for authentication at the authentication application, said request for authentication comprising an indication for at least one mode of user verification,
- collecting through the user equipment authentication data for each of the modes of user verification indicated in the request for authentication,
- processing results of user authentication from said collected authentication data in the authentication application,
- transmitting the results of user authentication to the authentication server.
The aspect of the invention relates to a secure chip card, which is an electronic authentication device comprising a secured memory and processing circuitry. The secure chip card is configured to be connected to a user equipment for operating in a wireless network. Such connection is either removable, like a pluggable SIM card, or permanently, like a soldered SIM/MIM, or integral part of another circuit, like a baseband chip.
Said user equipment comprises all transmitter and receiver circuitry for radio signal exchange with at least one base station of a wireless network. The user equipment in particular comprises a connectivity element like a cellular module, which includes the necessary hardware components to carry out radio communication with another radio unit, like a base station. Typically it is foreseen to attach to a wireless network by camping on the base station.
In a preferred embodiment it is proposed that the user equipment has registered to the wireless network by means of network access credentials stored in the secured chip card.
This is in particular happening through a defined set of authentication messages, in conjunction with the secure chip card the user equipment gets access to the wireless network, provided valid authentication data are stored on the secure chip card. This authentication mechanism is known under the term AKA.
The wireless network comprises a network subset where the access is governed by an authentication server according to the second aspect of the invention. Such network subset is in particular a network slice, as introduced with 5G. Additionally it can be an enterprise private network, like a camps network of a company.
The objective of the method is to authenticate a user operating with the user equipment, where the secure chip card is coupled to, to the network subset.
For that, after registering to the wireless network, that means camping on a base station of the wireless network, the method suggests the step of sending an authentication request to the authentication server. This is to trigger the authentication server for getting access.
The authentication request comprises preferably a user identifier.
Additionally information relating to the user equipment may be submitted. This is advantageous in order to inform the authentication server about the user equipment's capabilities for collecting from the user input for getting authenticated.
It is assumed that the authentication server is reachable either directly through the wireless network or via the envisaged network subset for the user equipment.
The secure chip card can instruct the user equipment to send such authentication request. For that in particular special channels are used, e.g. such that are in use for the AKA authentication method as well. This obviously differs from the logical channel, but the same physical protocol in particular APDU is mainly used. However for integrated secure chip card other protocols or channel are available.
For doing so the secure chip card comprises an authentication application, which is a software module executable on the secure chip card. It may be part of the operating system, or an add-on, like an applet.
This authentication application is in particular assigned to at least one network subset. Preferably the secure chip card has stored additional authentication application for other network subsets of this or another wireless network.
In response the authentication server sends a request for authentication, which is received and handled at the authentication application.
This request for authentication comprises at least one mode of user verification. This means, at least one way to get authentication information from the user.
Typically it will be more than one verification mode, in particular considering the capabilities of the user equipment, which were preferably indicated with the request for authentication. In response the authentication server would send a request for authentication fitting to the user equipment.
The authentication application resp. the secure chip card instructs consequently the user equipment to gather the necessary data from the user for the received verification modes, if possible.
In particular a first and a second of said modes of verification requires a different type of data collection from the user of the user equipment.
That may mean, that a biometric authentication is triggered, like a voice recording for voice recognition, taking a photo for facial recognition etc. Also the simple entry of a PIN might be requested following a respective verification mode.
The collected data are processed in order to form results of user authentication. Depending upon the verification mode the result is either the indication if the collected information are right, e.g. the correct PIN was entered. Alternatively the collected data are made ready for sending to the authentication server. This relates in particular to the biometric data. Such authentication results are in particular encrypted and/or compressed before sending to the authentication server.
The processed results of user authentication are consequently transmitted to the authentication server by means of the user equipment's communication link to the wireless network via the serving base station.
Preferably in response the authentication server sends an indication about the set of access rights for the network subset, which is received at the secure chip card. With that the secure chip card has knowledge if any access is allowed for the user, which can be provided as feedback. E.g. a new attempt can then be made.
In a further preferred embodiment it is suggested that the set of access rights is limited in response to the transmitted results of user authentication.
With that embodiment the access rights are however limited in response to the submitted results of user authentication. That means if a comparably bad face recognition result is achieved, then only a limited set of access rights may be granted. That might mean that the user might access the network subset, but may not carry out that activities, like starting special services, as the user would according to the access rights stored in the user profile at the authentication server would normally could do.
In the case of bad recognition of the results of user authentication however still no access at all might be granted.
This approach is way better for the user than having no access at a higher recognition rate, but gives the authentication server a good level of security for the network subset.
In another advantageous embodiment it is proposed that said request for user authentication comprises an associated user verification policy, said user verification policy indicating the requested modes of user verification.
With this embodiment the secure chip card receives with the request for user authentication from the authentication server a verification policy which is in particular associated to the user. This is a compact way of requesting verification modes. Preferably it also predetermines access rights that are receivable for the user of the user equipment.
According to the fourth aspect of the invention it is proposed a secure chip card for communicatively coupled to a user equipment operating in a wireless network, the secure chip card comprising a authentication application, the wireless network comprising at least one subset of said wireless network, hereinafter the network subset, and an authentication server maintaining a set of authentication criteria for accessing said network subset, wherein for authenticating the user of the user equipment in the network subset the secure chip card of is configured to:
- send an authentication request to the authentication server,
- receive a request for authentication at the authentication application, said request for authentication comprising an indication for at least one mode of user verification,
- collect through the user equipment authentication data for each of the modes of user verification indicated in the request for authentication,
- process results of user authentication from said collected authentication data in the authentication application,
- transmit the results of user authentication to the authentication server.
The fourth aspect of the invention shares the advantages of the third aspect.

As it is shown this invention advantageously solves the depicted problem and suggests a method for authentication a user to a network subset in a very flexible and - in particular for the authentication server - configurable way.

### BRIEF DESCRIPTION OF THE DRAWINGS

The following description and the annexed drawings set forth in detail certain illustrative aspects and are indicative of but a few of the various ways in which the principles of the embodiments may be employed. Characteristics and advantages of the present invention will appear when reading the following description and annexed drawings of advantageous embodiments given as illustrative but not restrictive examples.
- Fig. 1: represents a secure chip card and an authentication server of the type to which the present invention is applied as an embodiment;
- Fig. 2: shows a sequence diagram of an exemplifying embodiment of the invention.

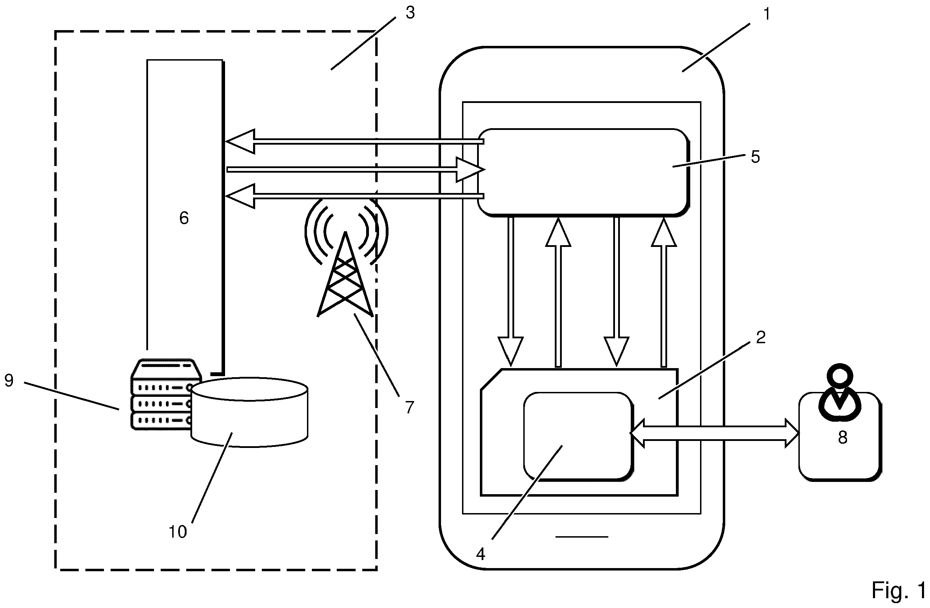

FIG. 1 schematically shows a secure chip card 2 of the type to which the present invention is applied as an embodiment in conjunction with an authentication server 9 coupled to a wireless network 3 and governing access to a network subset 6.
The network subset 6 is in this exemplifying embodiment a network slice of the wireless network 3. Typically the wireless network 3 is supporting the technology standard of 5G or beyond. Further the wireless network 3 is capable of maintaining a plurality of network slices. Such network slices are virtually separated areas like subnetworks, which are dedicated to a certain service, device type or enterprise private network, like a separate company network.
The network subset 6 might also form a complete or a part of an enterprise private network. This is installed either in a wireless network separate from an common network operator driving wireless network, or as one or more network slices from such a common wireless network.
The secure chip card 2 is connectively coupled to a user equipment 1, in this case a smartphone, but any other type of mobile device might be applied, including those in the field of Internet of things (loT) resp. machine-to-machine (M2M) communication. The user equipment is operating via base station 7 with the wireless network 3 by means of connectivity element 5. This is in particular a transceiver or a cellular module including transceiver.
The secure chip card 2 further comprises an authentication application 4. This authentication application 4 has the task to trigger requesting authentication data from the user 8 who is using the user equipment 1, and who is rather supposed to be authentication, than the user equipment 1.

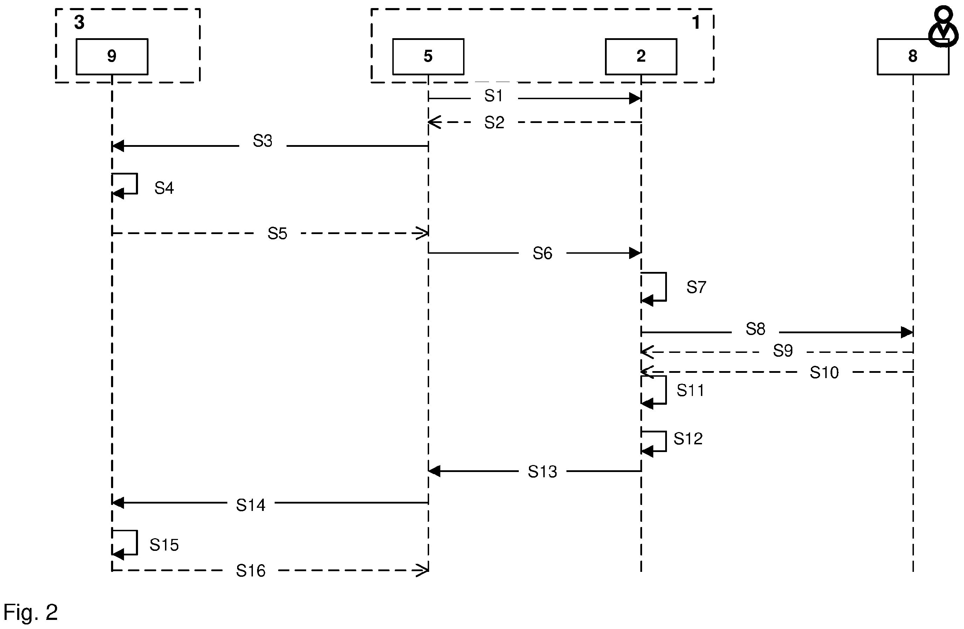

For that the network subset 6 has assigned an authentication server 9, which has access to an authentication database 10. The authentication database 10 comprises records for the user 8, defining access rights of the user for the network subset 6.
For giving access for a user 8 to the network subset 6 the user equipment 1 through the connectivity element 5 accesses the wireless network 3, in particular the network subset 6, in order to trigger an authentication request. The following steps, indicated by arrows between network subset 6, connectivity element 5 and the authentication application 4 are shown in detail in Fig. 2.
In FIG. 2 it is shown the authentication server 9, being as shown in Fig. 1 part of the wireless network 3. Further it is shown the connectivity element 5 and the secure chip card 2, both being part of the user equipment 1. The user equipment 1 is accessible by a user 8, in particular via a user interface, e.g. a touch display, display with entry buttons, camera, fingerprint sensor, microphone or any other sensors which are capable of collecting user interaction.
Part of the secure chip card 2 is further the authentication application 4 which acts as user verification unit. For simplifying the figure it is assumed that the activities of the secure chip card 2 are in particular carried out by the authentication application 4.
The shown sequence starts with message / step S1, wherein the user equipment 1 resp. the connectivity element 5 requests from the secure chip card 2 a user identifier. In this exemplifying embodiment it is assigned this task to the connectivity element 5. However another processing circuitry of the user equipment 1 could also have assigned this task.
The user identifier is any kind of identification, like a unique number, which is supposed to identify the user. This is preferably stored within the secure chip card. In a simple embodiment it is related to the subscription, like an IMSI, MSISDN or the like.
The secure chip card 2 responds to this request with said user identifier to the requesting connectivity element 5. The user equipment 1 and the secure chip card 2 can communicate via the hardware pins by means of a call interface, provided by the secure chip card 2.
The user equipment 1 resp. the connectivity element 5 can use this user Id, and - in particular in a concealed way - send an authentication request to the authentication server 9 of the wireless network, with message S3. Preferably information relating to the user equipment, that means device information, are submitted with this request as well. This is in particular advantageous for indicating capabilities in terms of available sensors for getting e.g. voice recordings or a fingerprint from the user 8.
The authentication server 9 considers the received data, in particular if the user 8, identified through the user identifier, is known to the authentication database 10.
Further it is evaluated based on the device information what kind of user authentication modes may be appropriate.
Consequently with message S5 the authentication server 9 sends back to the user equipment said request for authentication, which indicates at least one mode of user verification. The request for authentication may indeed comprise additional information, like the user identifier.
This request for authentication is handed over with message S6 to the secure chip card 2.
With step S7 the received request for authentication is evaluated, if it is feasible to fulfill, in particular taking in account the capabilities of the user equipment 1. In case of a positive outcome the secure chip card 2 instructs the user equipment 1 to request with step S8 from the user 8 an input for the purpose of authentication the user.
In this example two modes of user verification were requested, one per PIN and the second per fingerprint.
The user equipments collects the input S9 and S10 from the user 8 and hands it over to the secure chip card 2.
In step S11 the collected authentication data from the user for each mode of operation are verified. The verification step may have different extents.

E.g. for the entered PIN the verification step may comprises to check if the PIN is correct. If not, the user would be requested again for a predefined number of repetitions until the secure chip card may be blocked for further interaction. E.g. for biometric data like the fingerprint, the verification check is limited to quality measures etc. to avoid to carry out the following steps in vain, if it is clear that the collected biometric data cannot lead to a successful authentication.
In step S12 the collected authentication data are consequently processed in order to create authentication results for submitting to the authentication server.
This step of processing in particular may comprise for biometric data a first identification of characteristics, a compression, an encryption / ciphering etc.
For binary data like the PIN, the processing might lead to no data that are transferred to the authentication server 9, as a wrong PIN entry prevents the further steps, and it is not recommended to send the PIN or parts thereof outside of the user equipment.
With message S13 the processed authentication results are transmitted to the connectivity element 5 and from there sent with message S14 to the authentication server 9.
The authentication server 9 evaluates in step S15 the received authentication results. For that it in particular checks the received data in comparison to data stored in the authentication database 10. With that it is supposed to figure out what access rights for the user to the network subset 6 shall be granted. In particular the authentication database 10 stores an indication about access rights for the user 8.
Here in particular a matching of the biometric data is carried out. The outcome may be a value e.g. indication a percentage of matching. Depending of that match it is decided if the user gets access to the network subset 6.
In a particular exemplifying embodiment with the percentage of matching it is also amended the access rights. That means, if the matching is not sufficient, then only a basic access of general servers of e.g. the company network might be granted.

If however multiple modes of authentication are requested, with a combination of each of the evaluation results the matching gets higher, and consequently more access rights may be granted.
Typically the authentication database 10 comprises the maximum grantable amount of access rights, and with the matching percentage of one or more modes of user verification a limitation of said access rights might be appropriate.
Should the matching lead to no satisfactory level, which is typically a predefined threshold value e.g. below 50%, then no access rights are granted, that means the access is prohibited, as the authentication server 9 has to assume that the wrong user tries to get access to the network subset 6 with the user equipment 1.
With message S16 the authentication server informs the user equipment about the outcome of the evaluation of the results of authentication. This might be a binary yes/no, or comprise more information about the granted access rights for the user 8 to the network subset 6.

In the above detailed description, reference is made to the accompanying drawings that show, by way of illustration, specific embodiments in which the invention may be practiced. These embodiments are described in sufficient detail to enable those skilled in the art to practice the invention. It is to be understood that the various embodiments of the invention, although different, are not necessarily mutually exclusive. For example, a particular feature, structure, or characteristic described herein in connection with one embodiment may be implemented within other embodiments without departing from the scope of the invention. In addition, it is to be understood that the location or arrangement of individual elements within each disclosed embodiment may be modified without departing from the scope of the invention. The above detailed description is, therefore, not to be taken in a limiting sense, and the scope of the present invention is defined only by the appended claims, appropriately interpreted, along with the full range of equivalents to which the claims are entitled.

## Claims

1. Method for authentication of a user (8) of a user equipment (1) by an authentication server (9) being coupled to a wireless network (3), said authentication server (9) maintaining a set of authentication criteria for accessing at least one subset of said wireless network (3), hereinafter the network subset (6),
in response to receiving an authentication request of a user equipment (1) communicatively coupled to a secure chip card (2), the method comprises the steps of:
- sending a request for authentication to the secure chip card (2), said request for authentication indicating at least one mode of user verification,
- receiving at least one result of user authentication from the secure chip card (2),
- evaluating said received at least one result of user authentication,
- giving access to the network subset (6), if the evaluation step fulfills said authentication criteria.

2. Method according to claim 1,
wherein the network subset (6) comprises one or more network slices, and the authentication server (9) is assigned to at least one of said network slices.

3. Method according to at least one of the claims 1 or 2,
wherein the network subset (6) comprises an enterprise private network.

4. Method according to at least one of the claims 1 or 3,
wherein the step of evaluation comprises identifying a set of access rights for at least one of the wireless network and the network subset (6),
and the step of giving access comprises a limited access right for said at least one of the wireless network and the network subset (6).

5. Method according to at least one of the previous claims,
wherein the set of access rights is limited in response to the received results of user authentication.

6. Method according to at least one of the previous claims,
wherein said request for user authentication comprises an associated user verification policy, said user verification policy indicating the requested modes of user verification.

7. Authentication server (9) for authentication a user of a user equipment (1), the authentication server (9) being coupled to a wireless network (3), said authentication server further maintaining a set of authentication criteria for accessing at least one subset of said wireless network (3), hereinafter the network subset (6),
wherein the authentication server (9) is configured, in response to receiving an authentication request of a user equipment (1) communicatively coupled to a secure chip card (2),
- to send a request for authentication to the secure chip card (2), said request for authentication indicating at least one mode of user verification,
- to receive at least one result of user authentication from the secure chip card (2),
- to evaluate said received at least one result of user authentication,
- to give access to the network subset (6), if the evaluation step fulfills said authentication criteria.

8. Authentication server (9) according to claim 7,
wherein the set of access rights is limited in response to the received results of user authentication.

9. Authentication server (9) according to at least one of the claims 7 or 8,
wherein said request for user authentication comprises an associated user verification policy, said user verification policy indicating the requested modes of user verification.

10. Method for a secure chip card (2) communicatively coupled to a user equipment (1) operating in a wireless network (3), the secure chip card (2) comprising a authentication application, the wireless network (3)comprising at least one subset of said wireless network (3), hereinafter the network subset (6), and an authentication server (9) maintaining a set of authentication criteria for accessing said network subset (6),
wherein for authenticating the user of the user equipment (1) in the network subset (6) the method comprises the steps for the secure chip card (2) of:
- sending an authentication request to the authentication server (9),
- receiving a request for authentication at the authentication application, said request for authentication comprising an indication for at least one mode of user verification,
- collecting through the user equipment (1) authentication data for each of the modes of user verification indicated in the request for authentication,
- processing results of user authentication from said collected authentication data in the authentication application,
- transmitting the results of user authentication to the authentication server (9).

11. Method according to claim 10,
wherein a first and a second of said modes of verification requires a different type of data collection from the user of the user equipment (1).

12. Method according to at least one of the claims 10 or 11,
wherein the set of access rights is limited in response to the transmitted results of user authentication.

13. Method according to at least one of the claims 10 to 12,
wherein the request for user authentication comprises an associated user verification policy, said user verification policy indicating the requested modes of user verification.

14. Secure chip card (2) for communicatively coupled to a user equipment (1) operating in a wireless network (3), the secure chip card (2) comprising an authentication application (4), the wireless network (3) comprising at least one subset of said wireless network (3), hereinafter the network subset (6), and an authentication server (9) maintaining a set of authentication criteria for accessing said network subset (6), wherein for authenticating the user of the user equipment (1) in the network subset (6) the secure chip card (2) of is configured to:
- send an authentication request to the authentication server (9),
- receive a request for authentication at the authentication application (4), said request for authentication comprising an indication for at least one mode of user verification,
- collect through the user equipment (1) authentication data for each of the modes of user verification indicated in the request for authentication,
- process results of user authentication from said collected authentication data in the authentication application (4),
- transmit the results of user authentication to the authentication server (9).

15. Secure chip card (2) according to claim 14,
wherein a first and a second of said modes of verification requires a different type of data collection from the user of the user equipment (1).

16. Secure chip card (2) according to at least one of the claims 14 to 15,
wherein the set of access rights is limited in response to the transmitted results of user authentication.
